# EUROPEAN PATENT APPLICATION

(11) **EP 4 821 768 A1**
(43) Date of publication of application: **14.10.2026**
(21) Application number: 26171115.4
(22) Date of filing: 08.04.2026
(51) Int. Cl.: B60R 13/02

(54) **FASTENER FOR AUTOMOTIVE VEHICLES**

(30) Priority: 08.04.2025 US 202519173181
(71) Applicant: Tesla, Inc., Austin, TX 78725 (US)
(72) Inventor: YU, Yongquan, Austin, Texas 78725 (US); VEDYANINA, Kira, Austin, Texas 78725 (US)
(74) Representative: Bryn-Jacobsen, Caelia

(57) **Abstract**

A fastener assembly (114) for attaching a trim component (112) to a vehicle body can include a clip (302) securable to the trim component. The clip can define an opening (326) to receive a post (202) of the vehicle body at least partially therein. An insert (324) can be positionable at least partially within the clip. The insert can be engageable with the post to couple the clip and the trim component to the vehicle body.

## Description

### BACKGROUND

Fasteners can play an important role in the automotive industry by enabling the secure attachment of trim components to vehicle bodies. These trim components, such as door panels, headliners, and interior trim, not only improve or define the aesthetic appeal of automobiles but also can improve functional performance. The design and implementation of fasteners seek to ensure that these components remain securely in place, but in conventional fasteners this result has not always been successfully achieved. Fasteners can be permanent or removable, but conventional fasteners typically cannot be re-used and lack grip strength when attempts are made to re-use them.

### BRIEF DESCRIPTION OF THE SEVERAL VIEWS OF THE DRAWINGS

Various examples are illustrated in the figures of the accompanying drawings. Such examples are demonstrative and not intended to be exhaustive or exclusive examples of the present subject matter.
FIG. 1 is an isometric view of an automotive vehicle, according to some examples.
FIG. 2 is an illustration of an example of a vehicle body including an example of a post, according to some examples.
FIG. 3 is a cross-sectional view of an example of a fastener for coupling an example of a trim component to an example of a vehicle body, according to some examples.
FIG. 4 is a perspective view of an example of a fastener, according to some examples.
FIG. 5 is an exploded view of an example of a fastener, according to some examples.
FIG. 6 is an exploded view of an example of a fastener after an example of a trim component is decoupled from an example of a vehicle body, according to some examples.
FIG. 7 is a perspective view of an example of a fastener for coupling an example of a trim component and an example of a vehicle body, according to some examples.
FIG. 8 is a partial cross-sectional view of an example of a fastener coupled to an example of a trim component and an example of a vehicle body, according to some examples.
FIG. 9 is a side view of an example of a fastener installed within an example of a trim component, according to some examples.
FIG. 10 is an example of a fastener coupled to an example of a trim component, according to some examples.
FIG. 11 is an exploded view of an example of a fastener, according to some examples.
FIG. 12 is a top perspective view of an example of a fastener, according to some examples.
FIG. 13 is an exploded view of an example of a fastener coupled with an example of a trim component and an example of a vehicle body, according to some examples.
FIG. 14 is a bottom perspective view of an example of a fastener coupled to an example of a trim component, according to some examples.
FIG. 15 is an exploded view of an example of a fastener coupled to an example of a trim component and examples of variations in vehicle body panels, according to some examples.
FIG. 16 is a schematic diagram including an example of a method of using a fastener for coupling an example of a trim component to an example of a vehicle body, according to some examples.

### DETAILED DESCRIPTION

Fastening systems are used in numerous industries, seeking to join components securely and efficiently. These systems can encompass a wide array of fastener types, including screws, bolts, clips, adhesives, or the like, each designed to meet specific application needs.

Screws are widely used due to their ability to create strong, removable connections. They may be particularly advantageous in applications where disassembly and reassembly are required, such as in maintenance or repair tasks. However, the installation of screws can be time-consuming, as it often involves precise alignment and the application of appropriate torque to ensure a secure fit.

Bolts, similar to screws, may offer robust connections and are typically used in conjunction with nuts to fasten components tightly. They are generally favored in applications requiring high strength and load-bearing capacity, such as in construction and heavy machinery. The installation of bolts, while generally straightforward, can also be labor-intensive, especially in large-scale applications.

Adhesives may offer a unique advantage by providing a clean and seamless finish, eliminating the need for visible mechanical fasteners. This may make them particularly suitable for applications where aesthetics are a priority, such as in consumer electronics and furniture. Despite their aesthetic benefits, adhesives may not provide the same durability as mechanical fasteners, especially in environments subject to high stress or temperature variations.

Clips can sometimes provide a quick and easy fastening solution, potentially making them a good fit for applications where speed and efficiency are paramount. They are commonly used in automotive and electronics industries, where components need to be assembled rapidly.

Overarching design goals for fasteners can include balancing between ease of installation, strength, and appearance. This balance helps to ensure that fasteners meet both the functional and aesthetic requirements of their intended applications. However, a vehicle body (e.g., a component coupled to the vehicle body or frame, or the like) and a trim component presents a relatively unique problem for fastener systems. Some fasteners cannot be used because of the misalignment of the components. For example, manufacturing tolerances can cause misalignment of the components. As manufacturing tolerances stack up, the misalignment can be increased. These misalignments can make installation of the trim component on the portion of the vehicle body difficult and can cause aesthetic concerns (e.g., gaps, angles, or the like). Thus, a removable fastener system that can accommodate or compensate for component misalignment in more than one axis can help provide a viable fastener that can be efficiently installed. The present disclosure provides a fastener clip that can accommodate variances between the vehicle body and the trim components and looks to at least partially address the issues above.

In examples, a fastener assembly for attaching a trim component to a vehicle body can include a clip securable to the trim component. The clip can define an opening to receive a post of the vehicle body at least partially therein. An insert can be positionable at least partially within the clip. The insert can be engageable with the post to couple the clip and the trim component to the vehicle body.

In examples, a device for securing a trim component to a vehicle body, includes a clip securable to the trim component, the clip defining an opening to receive a post of the vehicle body at least partially therein, the clip including a tapered protrusion extending radially inward from the clip, and an insert positionable at least partially within the clip, the insert engageable with the post to couple the clip and the trim component to the vehicle body, the tapered protrusion configured to guide and retain the insert within the clip.

In examples, a method of coupling a trim component to a vehicle body, the method includes installing an insert within a clip, the clip including a tapered projection to guide and retain the insert within the clip, the clip defining an opening, securing the clip to the trim component, and inserting a post of the vehicle body within the opening to couple the clip and the trim component to the vehicle body.

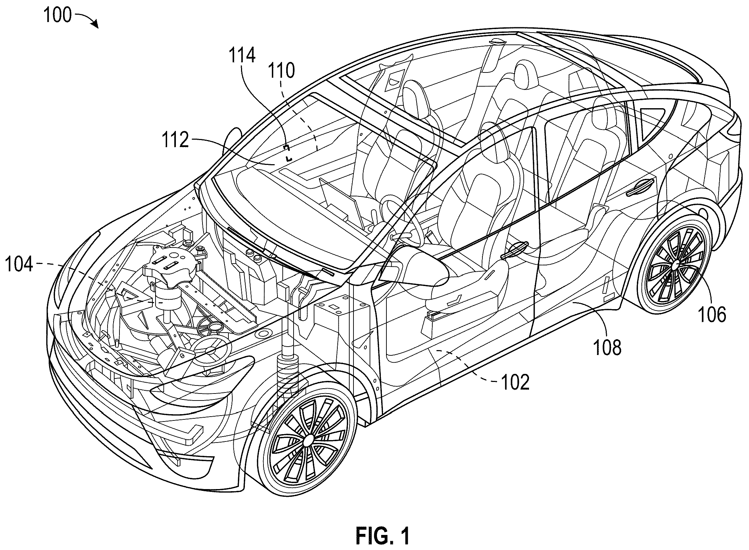

FIG. 1 illustrates an isometric view of an automotive vehicle 100, according to some examples. The automotive vehicle 100 can be a car, vehicle, automobile, or the like, operable to transport occupants or items over a road or other terrain. The automotive vehicle 100 can include a frame or a chassis 102, a drivetrain 104, wheels 106, a vehicle body 110, and a trim component 112. The wheels 106 can engage with a road or terrain and can be configured to support the automotive vehicle 100. The chassis 102 can support the drivetrain 104, which can be connected to the wheels 106. The drivetrain 104 can be operable to drive the wheels 106 to rotate such as to move the automotive vehicle 100. The vehicle body panels 108 can be connected to the chassis 102 and can help to reinforce the chassis 102 and improve drag or air resistance during transportation. The automotive vehicle 100 can also include one or more seats or seat assemblies securable to the chassis 102 and configured to support and help restrain occupants within the automotive vehicle 100.

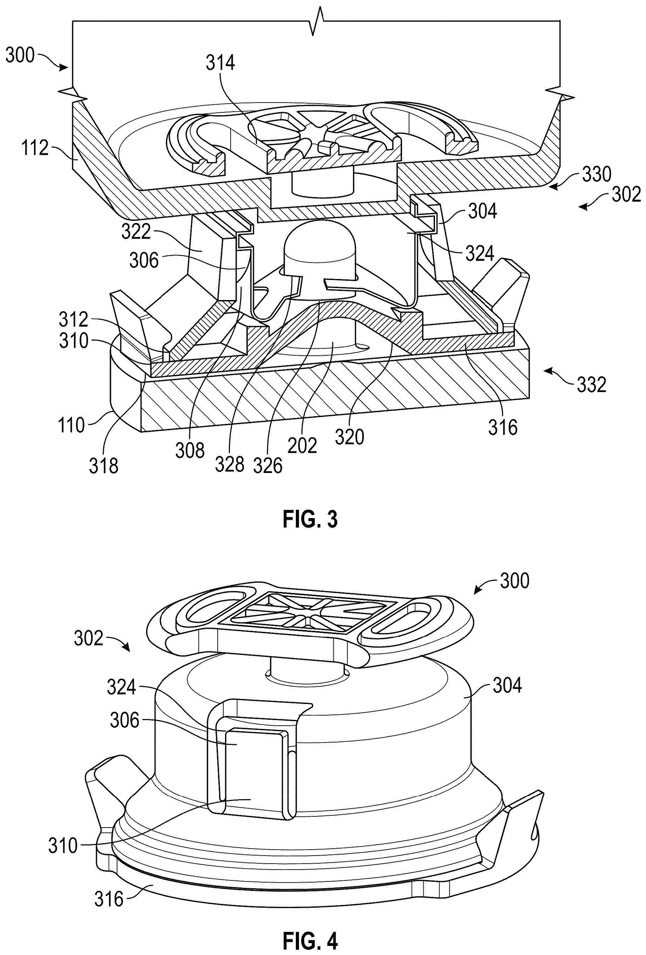

A fastener 114 can help attach the trim component 112 to the vehicle body 110, which can be connected to the chassis 102. The fastener 114 can be made of plastic, metal, polymers, composites, combinations thereof, or the like. When fully installed, the fastener 114 can couple the trim component 112 to the vehicle body 110. For example, the fastener 114 can prevent, limit, or inhibit translation of the trim component 112 away from the vehicle body 110 when fully installed. The fastener 114 for coupling the vehicle body 110 and the trim component 112 will be discussed in more detail with reference to FIG. 3- FIG. 16.

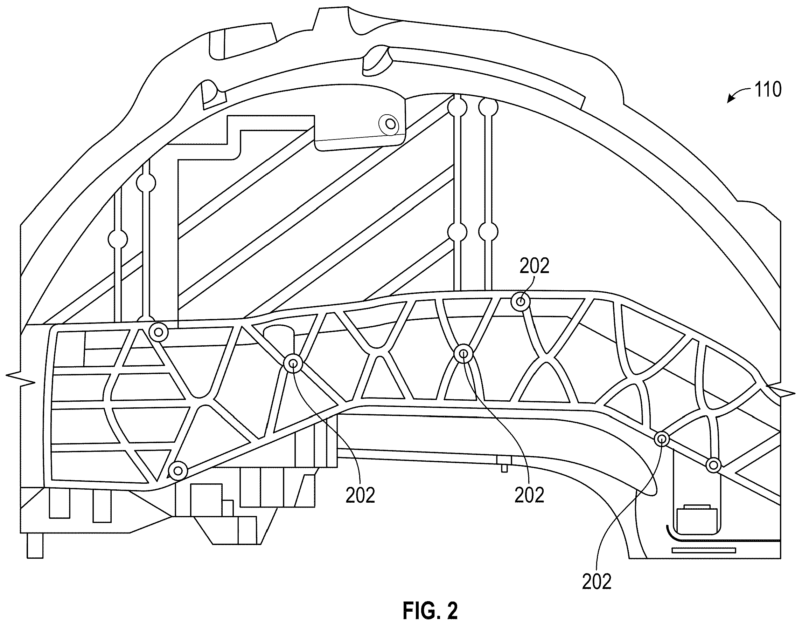

FIG. 2 is an illustration of an example of a portion of a vehicle body (e.g., the vehicle body 110). The vehicle body 110 can be attached to the chassis 102 (FIG. 1) and can be configured to have the trim component 112 secured thereto. As shown in FIG. 2, the vehicle body 110 can include one or more posts (e.g., a post 202). Each post 202 can be positioned on the vehicle body 110 to secure and support the trim component 112 attached (e.g., coupled, secured, or the like) thereto. Fasteners, such as the fastener 114 (FIG. 1) can be configured to engage with the post 202 to couple the trim component 112 to the vehicle body 110.

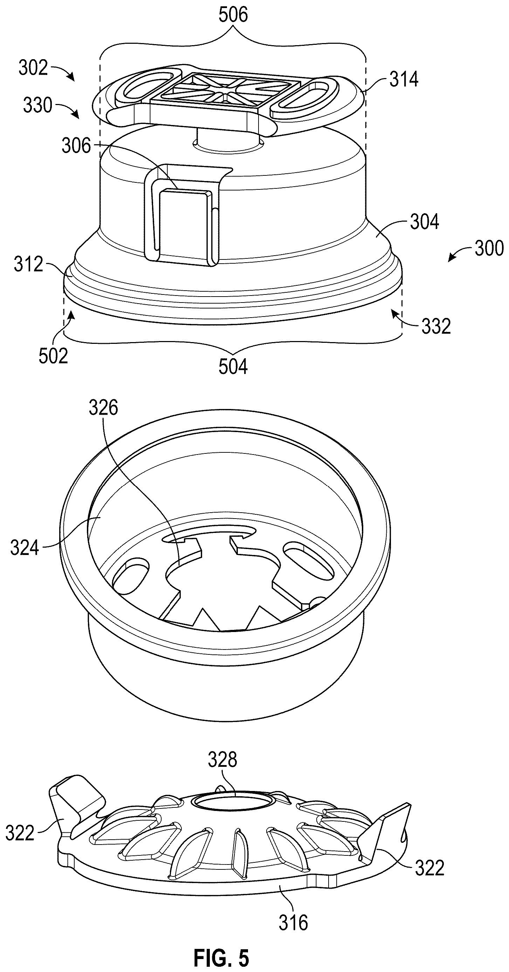

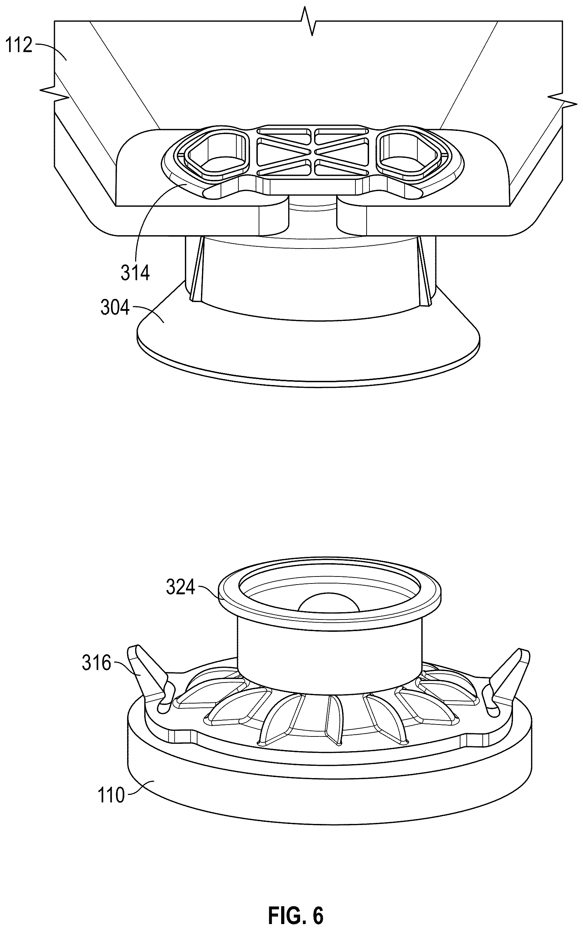

FIG. 3 - FIG. 6 are various views of a device, fastening assembly, a fastener 300 (e.g., the fastener 114, FIG. 1) and will be discussed together. FIG. 3 is a cross-sectional view of an example of the fastener 300. FIG. 4 is a perspective view of the fastener 300. FIG. 5 is an exploded view of the fastener 300. FIG. 6 is an exploded view of an example of the fastener 300 after the trim component 112 is decoupled from the vehicle body 110.

The fastener 300 can be consistent with the fastener 114 of FIG. 1. FIG. 3 - FIG. 6 show additional details and features of the fastener 114 and the vehicle body 110. The fastener 300 can be configured to removably couple the trim component 112 to the vehicle body 110. The fastener 300 can include a clip 302 and an insert 324.

The clip 302 can be securable to the trim component 112. The clip 302 can include a housing 304 and a base 316. The housing 304 can be configured to receive the insert 324. The base 316 can be removably coupled to the housing 304. The housing 304 can include a closed end 330 and an open end 332. The housing 304 and the base 316 can at least partially surround the insert 324 when the base 316 is coupled to the housing 304.

The housing 304 can be securable (e.g., configured to receive) to the insert 324. As shown in. FIG. 3, the housing 304 can include a bell-shaped profile. In other examples, the housing 304 can include a cylindrical, conical, dome, or any other profile that can be configured to receive the insert 324. The housing 304 can include a projection 306 extending toward a closed end 330 from a flexible base 310. The projection 306 can extend inward (e.g., away from a periphery of the housing 304) from an inner surface 308 (FIG. 3) of the housing 304. The projection 306 can removably couple (e.g., secure) the insert 324 within the housing 304. The flexible base 310 can enable outward (e.g., away from the insert 324) movement of the projection 306 during the insertion of the insert 324 from the housing 304. Moreover, the flexible base 310 can enable the projection 306 to move outward upon engagement by a user to release (e.g., decouple) the insert 324 from the housing 304.

A flange 314 can extend from the closed end 330 in a direction away from the open end 332. The flange 314 can also extend laterally outward from the closed end 330 of the housing 304. As shown in FIG. 3, the flange 314 can couple the housing 304 to the trim component 112. In examples, the flange 314 and the housing 304 can be a monolithic component. In other examples, the flange 314 can be coupled, attached, or secured to the housing 304 opposite the open and 332.

As shown in FIG. 5, the closed end 330 can define a closed end diameter 504 and the open end 332 can define an open end diameter 506. The open end diameter 506 can be larger than the closed end diameter 504. In other examples, the opening diameter 506 can be substantially equal to the closed diameter 504. And yet another example, the open and diameter 506 can be less than the closed in diameter 504.

As shown in FIG. 6, the base 316 and the housing 304 can be removably coupled together and the housing 304 and the insert 324 can be removably coupled together to permit removal of the trim component 112 from the vehicle body 110. The housing 304 can be configured to remain coupled to the trim component 112 when the trim component 112 is removed from the vehicle body 110 and the insert 324 and the base 316 can be configured to remain coupled to the post 202 of the vehicle body 110 when the trim component 112 is removed from the vehicle body 110.

To recouple the trim component 112 to the vehicle body 110, the post 202 of the vehicle body 110 can be reinserted within the opening 326 of the insert 324 and the projection 306 can engage with the insert 324 to recouple the housing 304 and the insert 324 and the tab 322 can engage with the groove 312 to couple the base 316 and the housing 304 to recouple the trim component 112 to the vehicle body 110.

In summary, the fastener 300 can be used to removably couple the trim component 112 to the vehicle body 110. The fastener 300 can provide a secure connection between the vehicle body 110 and the trim component 112 and can permit easy decoupling and removal of the trim component 112 from the vehicle body 110. The housing 304 and the base 310 can be removal coupled to one another. The housing 304 can be configured to receive the insert 324. The insert 324 can be configured to engage the post 202 of the vehicle body 110 to couple the trim component 112 to the vehicle body 110. To remove the trim component 112 from the vehicle body 110 the base 310 can be decoupled from the housing 304. When the base 310 is the coupled from the housing 304 The insert 324 and the base 310 can remain coupled to the post 202 of the vehicle body 110 and the housing 304 can remain coupled to the trim component 112. To recall the trim component 112 in the vehicle body 110 the housing 304 and the base 310 can be re-coupled.

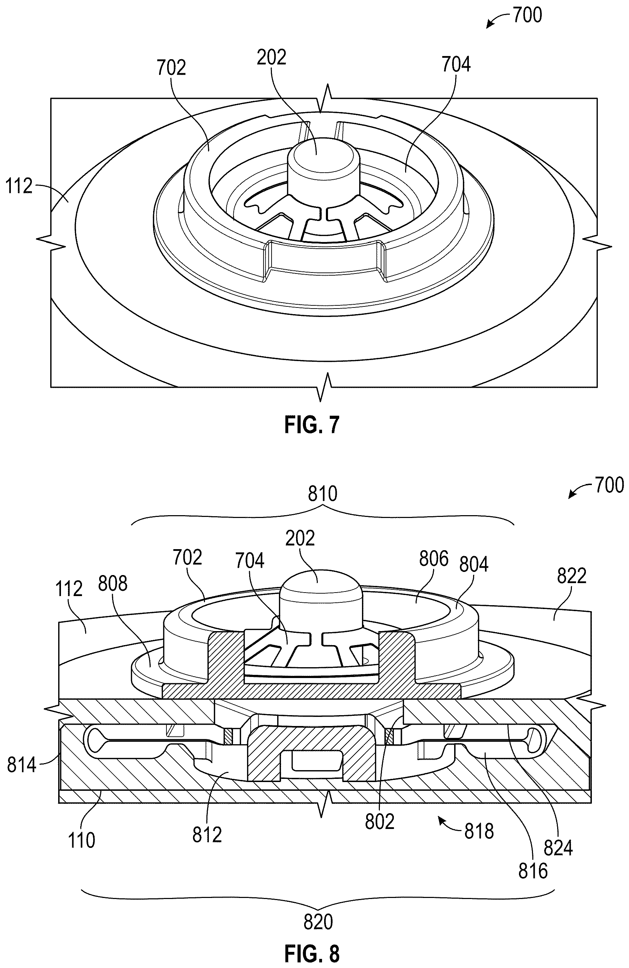

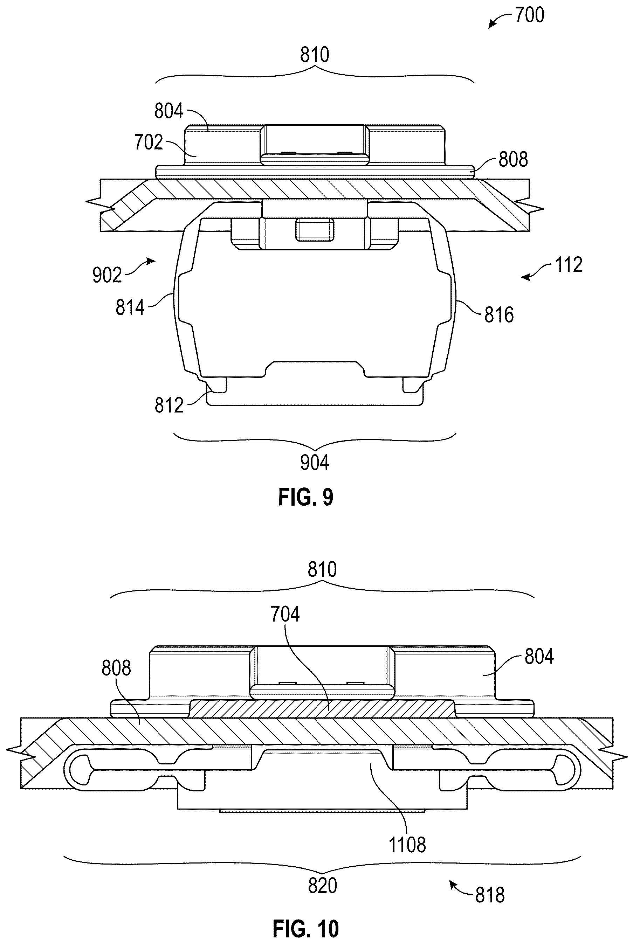

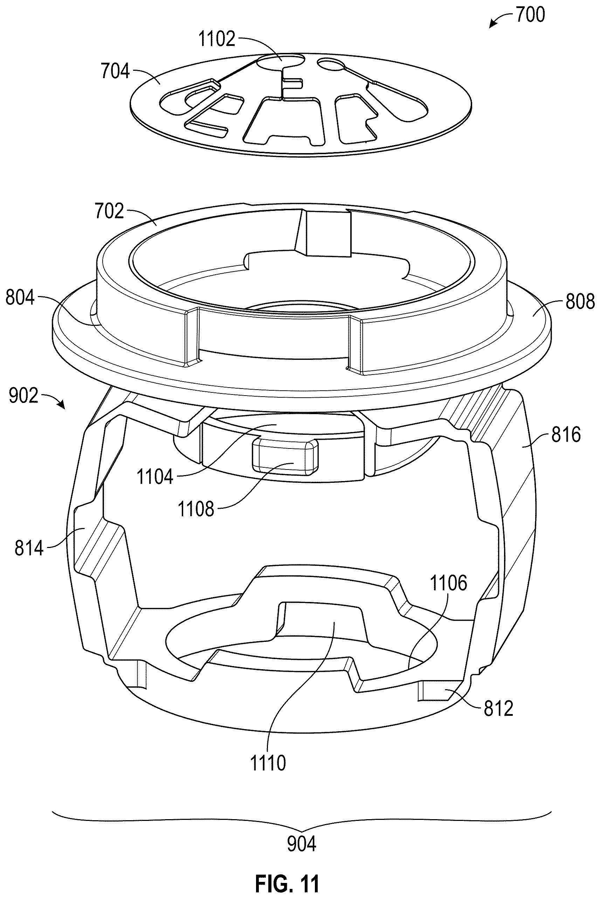

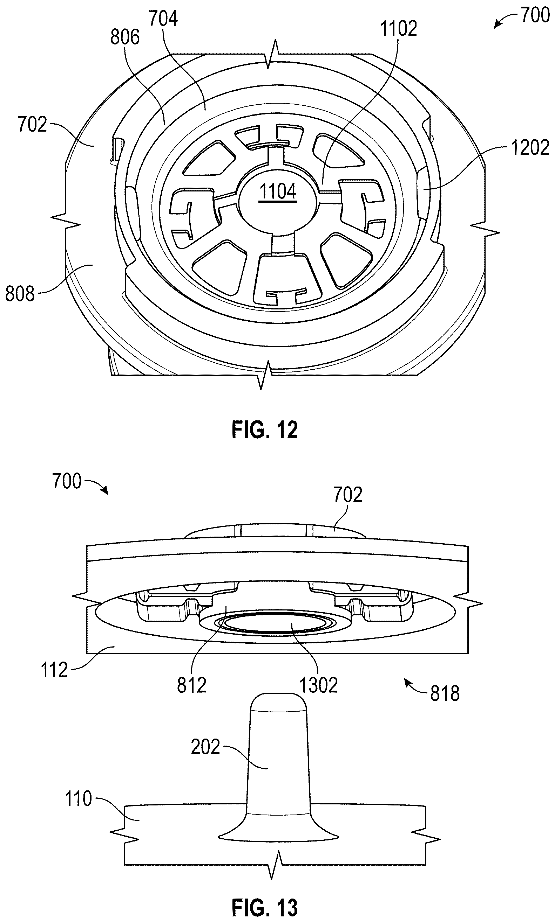

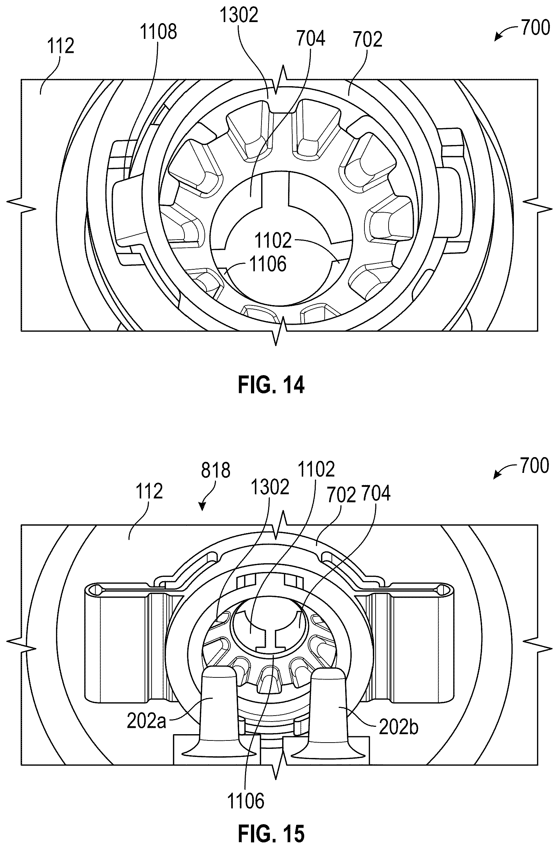

FIG. 7 - FIG. 15 each show examples of a device, fastening assembly, or a fastener 700, which can be consistent with the fastener 114 of FIG. 1 and the fastener 300 of FIG. 3 - FIG. 6 and can be configured to couple the trim component 112 to a portion of the vehicle body 110. FIG. 7 is a perspective view of an example of a fastener 700. FIG. 9 is a side view of the fastener 700 installed within the trim component 112. FIG. 11 is an exploded view of the fastener 700. FIG. 12 is a top perspective view of the fastener 700. FIG. 10 is an example of the fastener 700. FIG. 13 is an exploded view of the fastener 700 coupled with the trim component 112 and a portion of the vehicle body 110. FIG. 8 is a partial cross-sectional view of the fastener 700 coupled to the trim component 112 and a portion of the vehicle body 110. FIG. 14 is a bottom perspective view of the fastener 700 coupled to the trim component 112. FIG. 15 is an exploded view of an example of the fastener 700 coupled to the trim component 112 and a portion of the vehicle body 110. The fastener 700 can include a clip 702 and an insert 704.

As shown in FIG. 7, the clip 702 can couple the fastener 700 to the trim component 112. As also shown in FIG. 7, the insert 704 can be coupled, secured, or held within the clip 702 and the insert 704 can receive the post 202 to couple the fastener 700 to the vehicle body 110. In other words, the clip 702 can engage with the trim component 112, the insert 704 can be installed within the clip 702, and the insert 704 can engage with the post 202 of the vehicle body 110 to couple the trim component 112 to the vehicle body 110.

As shown in FIG. 8, the clip 702 can be inserted through an aperture 802 of the trim component 112. The clip 702 can include a body 804, a flange 808, a base 812, a first wing 814, and a second wing 816. The body 804 can receive the insert 704. For example, the body 804 can include a recessed portion 806 to receive the insert 704. The flange 808 can extend from the body 804. The flange 808 can include a flange diameter 810 greater than a diameter of the body 804. The flange diameter 810 can also be greater than a diameter of the aperture 802 of the trim component 112. The flange 808 can engage with the trim component 112 when the clip 702 is inserted through an aperture 802 of the trim component 112.

The clip 702 can also include a first wing 814 and a second wing 816. The first wing 814 can be hingeably connected to the base 812 and the body 804. The second wing 816 can be hingeably connected to the base 812 and the body 804 opposite the first wing 814. The first wing 814 and the second wing 816 can be operable between an extended position 902, as shown in FIG. 9, and a retracted position 818, as shown in FIG. 8. The clip 702 can be configured to be inserted within the trim component 112 when the first wing 814 and the second wing 816 are in the extended position 902. After the clip 702 is inserted into the trim component 112 the first wing 814 and the second wing 816 can be positioned in the retracted position 8182 couple the clip 702 to the trim component 112.

As shown in FIG. 8, in the retracted position 818, the first wing 814 and the second wing 816 can define a retracted diameter 820. The retracted diameter 820 can be greater than the extended diameter 904 (FIG. 9). The retracted diameter 820 can be greater than a diameter of the aperture 802 such that the clip 702 cannot be removed from the aperture 802 of the trim component 112 while the clip 702 is in the retracted position 818. In the retracted position 818, the flange 808 can engage an internal surface 822 of the trim component 112 and the first wing 814 and the second wing 816 can engage a vehicle body facing surface 824 of the trim component 112. The internal surface 822 can face away from the portion of the vehicle body 110 that the fastener 700 couples the trim component 112 thereto. The vehicle body facing surface 824 can face toward the portion of the vehicle body 110 that the fastener 700 couples the trim component 112 thereto.

In the extended position 902, first shown in FIG. 9, the first wing 814 and the second wing 816 can be insertable through the aperture 802 (FIG. 8) of the trim component 112. In the extended position 902, the first wing 814 and the second wing 816 can define an extended diameter 904. The extended diameter 904 can be less than a diameter of the aperture 802 (FIG. 8). The extended diameter 904 can also be less than the flange diameter 810 such that the base 812, the first wing 814, and the second wing 816 can fit through the aperture 802 and the flange 808 engages with the trim component 112 to prevent the clip 702 from going through the aperture 802.

An opening 1102 can extend through the insert 704. The opening 1102 can be configured to receive the post 202 (FIG. 2) of the vehicle body 110 to couple the insert 704 and the clip 702 to the post 202. An opening 1104 can be formed in the body 804 and an opening 1106 can be formed in the base 812. The opening 1102 of the insert 704, the opening 1104 of the body 804, and the opening 1106 of the base 812 can define different diameters. For example, the opening 1102 of the insert 704 can have a smaller diameter than the diameters defined by either of the opening 1104 or the opening 1106. In examples, the opening 1102 of the insert 704 can define a diameter smaller than the opening 1104 of the body 804 and the opening 1106 of the base 812 and the opening 1104 of the body 804 can define a smaller diameter than the diameter defined by the opening 1106 of the base 812.

As shown in FIG. 11, the body 804 can include a projection 1108 and the base 812 can include a groove 1110. The groove 1110 can receive the projection 1108 to retain (e.g., secure, hold, or maintain) the first wing 814 and the second wing 816 in the retracted position 818. In examples, the engagement between the projection 1108 and the groove 1110 can provide haptic feedback to a user to signify that the clip 702 is properly positioned in the retracted position 818.

Though a projection 1108 and a groove 1110 are shown, the present disclosure should not be limited to only the projection 1108 formed on the body 804 and the projection 1108 formed on the base 812. For example, the present disclosure also contemplates other coupling or securing interfaces that can be used to hold, secure, or maintain the clip 702 in the retracted position 818. For example, the projection 1108 can be formed in the base 812 and the groove 1110 can be formed in the body 804. In examples, other engagements can be used, such as latches, ridges, protrusions, adhesives, or any other non-permanent securing means that can secure, hold, or maintain the clip 702 in the retracted position 818.

The recessed portion 806 can receive the insert 704. As shown in FIG. 12,the recessed portion 806 can include a tapered projection 1202. The tapered projections 1202 can extend radially inward as the tapered projection 1202 extends toward the flange 808. The tapered projection 1202 can guide the insert 704 within the recessed portion 806. The tapered projection 1202 can retain the insert 704 within the recessed portion 806 as the insert 704 is positioned within the recessed portion 806 between the tapered projection 1202 and adjacent to and radially inward from the flange 808. To decouple the trim component one 112 from the vehicle body 110 a user can insert an instrument to engage with the insert 704 and remove the insert 704 from the recessed portion 806. The opening 1102 of the insert 704 can be concentrically aligned with the opening 1104 of the body 804 when the insert 704 is installed within the recessed portion 806 of the body 804.

As best shown in FIG. 13 and FIG. 14, the base 812 can include a recess 1302. The recess 1302 can be configured to guide the post 202 of the trim component 112 toward the opening 1106 of the base 812, the opening 1104 of the body 804, and ultimately the opening 1102 of the insert 704. The recess 1302 can help the fastener 700 be used when one or both of the trim component 112 or the vehicle body 110 are misaligned.

The adjustability provided to the fastener 700 from the recess 1302 can be seen in FIG. 15. The recess 1302 permits the fastener 700 to be used on a post 202 aligned with an outer edge of the recess 1302, as represented in FIG. 15 as the first post 202a and the second post 202b. As discussed herein, the fastener 700 can be used when the post 202 is positioned in the position of the first post 202a or the second post 202b. As the recess 1302 engages with the post 202, the recess 1302 guides the post 202 toward the opening 1106 of the base 812, the opening 1104 of the body 804 and the opening 1102 of the insert 704.

The fastener 700, similar to fasteners 114 and 300, can be designed to removably couple a trim component to a vehicle body. The fastener 700 can include a clip and an insert. The clip can include a body, flange, base, and wings that can move between extended and retracted positions. In the extended position, the clip can be configured to be inserted through an aperture of the trim component. The clip can be positioned in the extracted position to couple the clip to the trim component. Well, the clip is coupled to the trim component and in the retracted position, the clip can receive a post from the vehicle body. As the post is inserted into an opening of the clip, the insert can engage with the post to couple the trim component to the vehicle body. To remove the trim component from the vehicle body, the insert can be removed from the clip, and the clip and the trim component can be decoupled from the vehicle body. The fastener 700 can also include a recess that can be configured to guide the post into the opening and toward the insert. Thus, like the fastener 114 and the fastener 300, the fastener 700 can also accommodate misalignment of the trim component and the vehicle body due to manufacturing tolerance stack-ups.

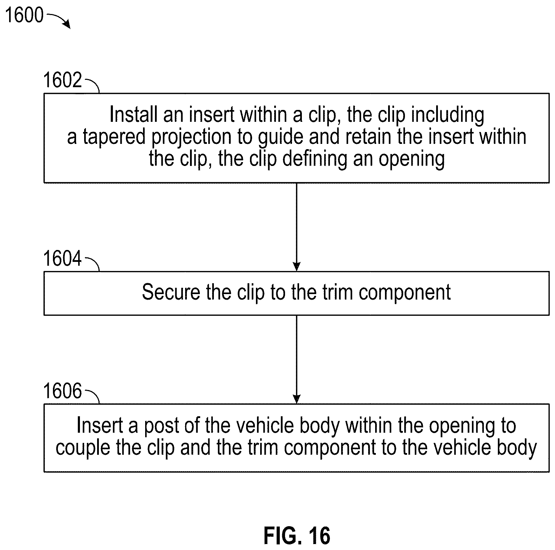

FIG. 16 is a schematic diagram including an example of a method 1600. The method 1600 can include using a fastener for coupling an example of a trim component (e.g., the trim component 112, FIG. 1) to an example of a vehicle body (e.g., the vehicle body 110), according to some examples. The method 1600 can optionally include one or more of operation 1602 - operation 1606.

At operation 1602, method 1600 can optionally include installing an insert within a clip. The clip can include a tapered projection to guide and retain the insert within the clip. The clip can define an opening.

At operation 1604, method 1600 can optionally include securing the clip to the trim component. For example, the clip can be inserted through an aperture of the trim component until the flange of the clip engages the trim component.

In operation 1606, method 1600 inserts a post of the vehicle body within the opening to couple the clip and the trim component to the vehicle body. For example, after the fastener is a couple to the trim component, the post of the vehicle body can be aligned with an opening of the clip such that the insert of the clip can engage with the post when the post is inserted through the opening of the clip. Engagement between the insert and the post can couple the fastener to the post of the vehicle body to directly couple the trim component to the vehicle body.

The following non-limiting examples detail certain aspects of the present subject matter to solve the challenges and provide the benefits discussed herein, among others.

Example 1 is a fastener assembly for attaching a trim component to a vehicle body, comprising: a clip securable to the trim component, the clip defining an opening to receive a post of the vehicle body at least partially therein; and an insert positionable at least partially within the clip, the insert engageable with the post to couple the clip and the trim component to the vehicle body.

In Example 2, the subject matter of Example 1 optionally includes wherein the clip comprises: a housing securable to the insert; and a base removably coupled to the housing, the housing and the base configured to at least partially surround the insert when the base is coupled to the housing.

In Example 3, the subject matter of Example 2 optionally includes wherein the housing comprises: a projection extending from an inner surface of the housing, the projection configured to removably couple the housing and the insert.

In Example 4, the subject matter of any one or more of Examples 2-3 optionally include wherein the housing defines a closed end and an open end, the housing including: a diameter larger at the open end than a diameter at the closed end, the open end defining the opening; and a flange extending from the closed end of the housing in a direction away from the open end of the housing, and the flange extending laterally outward from the closed end of the housing, the flange configured to couple the housing to the trim component.

In Example 5, the subject matter of Example 4 optionally includes wherein the base comprises: a recess formed in the base, the recess configured to guide the post of the vehicle body into the opening.

In Example 6, the subject matter of any one or more of Examples 4-5 optionally include wherein the base comprises: a tab extending from a periphery of the base and configured to engage with the open end of the housing to removably couple the base to the housing.

In Example 7, the subject matter of Example 6 optionally includes wherein the open end of the housing includes a groove, the groove configured to engage with the tab to removably couple the base and the housing.

In Example 8, the subject matter of any one or more of Examples 6-7 optionally include wherein: the base and the housing are removably coupled together and the housing and the insert are removably coupled together to permit removal of the trim component from the vehicle body; the housing is configured to remain coupled to the trim component when the trim component is removed from the vehicle body, and the insert and the base are configured to remain coupled to the post of the vehicle body when the trim component is removed from the vehicle body.

In Example 9, the subject matter of any one or more of Examples 1-8 optionally include wherein the clip includes: a body defining a recessed portion configured to receive the insert; a flange extending from the body and configured to engage with the trim component when the clip is inserted through an aperture of the trim component; a base including a recess to guide the post of the trim component toward the opening; a first wing hingeably connected to the base and the body; and a second wing hingeably connected to the base and the body opposite the first wing.

In Example 10, the subject matter of Example 9 optionally includes wherein the first wing and the second wing operable between an extended position and a retracted position, in the extended position the first wing and the second wing insertable through the aperture of the trim component and in the retracted position the first wing and the second wing couple the clip to the trim component.

In Example 11, the subject matter of Example 10 optionally includes wherein in the extended position, the first wing and the second wing define an extended diameter, and in the retracted position, the first wing and the second wing define a retracted diameter, the retracted diameter greater than the extended diameter.

In Example 12, the subject matter of Example 11 optionally includes wherein the extended diameter is less than a diameter of the aperture of the trim component and wherein the retracted diameter is greater than a diameter of the flange.

In Example 13, the subject matter of any one or more of Examples 10-12 optionally include wherein the body includes a projection and the base includes a groove, the groove configured to receive the projection to retain the first wing and the second wing in the retracted position.

In Example 14, the subject matter of any one or more of Examples 9-13 optionally include wherein the recessed portion includes a tapered projection, the tapered projection configured to guide the insert within the recessed portion and retain the insert within the recessed portion.

Example 15 is a device for securing a trim component to a vehicle body, comprising: a clip securable to the trim component, the clip defining an opening to receive a post of the vehicle body at least partially therein, the clip including a tapered protrusion extending radially inward from the clip; and an insert positionable at least partially within the clip, the insert engageable with the post to couple the clip and the trim component to the vehicle body, the tapered protrusion configured to guide and retain the insert within the clip.

In Example 16, the subject matter of Example 15 optionally includes wherein the clip comprises: a housing securable to the insert, the housing defining a closed end and an open end, the housing including: a diameter larger at the open end than a diameter at the closed end, the open end defining the opening; a flange extending from the closed end of the housing in a direction away from the open end of the housing, and the flange extending laterally outward from the closed end of the housing, the flange configured to couple the housing to the trim component; a projection extending from an inner surface of the housing, the projection configured to removably couple the housing and the insert; and a groove formed in the open end of the housing; and a base removably coupled to the housing, the housing and the base configured to at least partially surround the clip when the base is coupled to the housing, the base including: a recess formed in the base, the recess configured to guide the post of the vehicle body into the opening; and a tab extending from a periphery of the base and configured to engage with the groove formed in the open end of the housing to removably couple the base to the housing.

In Example 17, the subject matter of Example 16 optionally includes wherein: the base and the housing are removably coupled together and the housing and the insert are removably coupled together to permit removal of the trim component from the vehicle body; the housing is configured to remain coupled to the trim component when the trim component is removed from the vehicle body, and the insert and the base are configured to remain coupled to the post of the vehicle body when the trim component is removed from the vehicle body.

In Example 18, the subject matter of any one or more of Examples 15-17 optionally include wherein the clip includes: a body defining a recessed portion configured to receive the insert; a flange extending from the body and configured to engage with the trim component when the clip is inserted through an aperture of the trim component; a base; a first wing hingeably connected to the base and the body; and a second wing hingeably connected to the base and the body opposite the first wing; and wherein the first wing and the second wing are operable between an extended position and a retracted position, in the extended position, the first wing and the second wing are insertable through the aperture of the trim component, and, in the retracted position, the first wing and the second wing couple the clip to the trim component.

In Example 19, the subject matter of Example 18 optionally includes wherein the body includes a projection and the base includes a groove, the groove configured to receive the projection to retain the first wing and the second wing in the retracted position, and wherein the recessed portion includes a tapered projection, the tapered projection configured to guide the insert within the recessed portion and retain the insert within the recessed portion.

Example 20 is a method of coupling a trim component to a vehicle body, the method comprises: installing an insert within a clip, the clip including a tapered projection to guide and retain the insert within the clip, the clip defining an opening; securing the clip to the trim component; and inserting a post of the vehicle body within the opening to couple the clip and the trim component to the vehicle body.

Example 21 can include a fastener, system, device, or method including any element of any of examples 1-20.

The above-detailed description includes references to the accompanying drawings, which form a part of the detailed description. The drawings show, by way of illustration, specific examples that may be practiced. These examples are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The term "about," as used herein, means approximately, in the region of, roughly, or around. When the term "about" is used in conjunction with a numerical range, it modifies that range by extending the boundaries above and below the numerical values set forth. In general, the term "about" is used herein to modify a numerical value above and below the stated value by a variance of 10%. In one aspect, the term "about" means plus or minus 10% of the numerical value of the number with which it is being used. Therefore, about 50% means in the range of 45%-55%. Numerical ranges recited herein by endpoints include all numbers and fractions subsumed within that range (e.g., 1 to 5 includes 1, 1.5, 2, 2.75, 3, 3.90, 4, 4.24, and 5). Similarly, numerical ranges recited herein by endpoints include subranges subsumed within that range (e.g., 1 to 5 includes 1-1.5, 1.5-2, 2-2.75, 2.75-3, 3-3.90, 3.90-4, 4-4.24, 4.24-5, 2-5, 3-5, 1-4, and 2-4). It is also to be understood that all numbers and fractions thereof are presumed to be modified by the term "about."

The above description is intended to be illustrative, and not restrictive. For example, the above-described examples (or one or more aspects thereof) may be used in combination with each other. Other examples may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed examples

## Claims

1. A fastener assembly for attaching a trim component to a vehicle body, comprising:
a clip securable to the trim component, the clip defining an opening to receive a post of the vehicle body at least partially therein; and
an insert positionable at least partially within the clip, the insert engageable with the post to couple the clip and the trim component to the vehicle body.

2. The fastener assembly of claim 1, wherein the clip comprises:
a housing securable to the insert; and
a base removably coupled to the housing, the housing and the base configured to at least partially surround the insert when the base is coupled to the housing.

3. The fastener assembly of claim 2, wherein the housing comprises:
a projection extending from an inner surface of the housing, the projection configured to removably couple the housing and the insert; or optionally
wherein the housing defines a closed end and an open end, the housing including:
a diameter larger at the open end than a diameter at the closed end, the open end defining the opening; and
a flange extending from the closed end of the housing in a direction away from the open end of the housing, and the flange extending laterally outward from the closed end of the housing, the flange configured to couple the housing to the trim component.

4. The fastener assembly of claim 3, wherein the base comprises:
a recess formed in the base, the recess configured to guide the post of the vehicle body into the opening; or optionally wherein the base comprises:
a tab extending from a periphery of the base and configured to engage with the open end of the housing to removably couple the base to the housing.

5. The fastener assembly of claim 4, wherein the open end of the housing includes a groove, the groove configured to engage with the tab to removably couple the base and the housing; or optionally wherein:
the base and the housing are removably coupled together and the housing and the insert are removably coupled together to permit removal of the trim component from the vehicle body;
the housing is configured to remain coupled to the trim component when the trim component is removed from the vehicle body, and
the insert and the base are configured to remain coupled to the post of the vehicle body when the trim component is removed from the vehicle body.

6. The fastener assembly of any one of the preceding claims, wherein the clip includes:
a body defining a recessed portion configured to receive the insert;
a flange extending from the body and configured to engage with the trim component when the clip is inserted through an aperture of the trim component;
a base including a recess to guide the post of the trim component toward the opening;
a first wing hingeably connected to the base and the body; and
a second wing hingeably connected to the base and the body opposite the first wing.

7. The fastener assembly of claim 6, wherein the first wing and the second wing operable between an extended position and a retracted position, in the extended position the first wing and the second wing insertable through the aperture of the trim component and in the retracted position the first wing and the second wing couple the clip to the trim component.

8. The fastener assembly of claim 7, wherein in the extended position, the first wing and the second wing define an extended diameter, and in the retracted position, the first wing and the second wing define a retracted diameter, the retracted diameter greater than the extended diameter.

9. The fastener assembly of claim 8, wherein the extended diameter is less than a diameter of the aperture of the trim component and wherein the retracted diameter is greater than a diameter of the flange.

10. The fastener assembly of any one of claims 7-9, wherein the body includes a projection and the base includes a groove, the groove configured to receive the projection to retain the first wing and the second wing in the retracted position.

11. The fastener assembly of any one of claims 6-10, wherein the recessed portion includes a tapered projection, the tapered projection configured to guide the insert within the recessed portion and retain the insert within the recessed portion.

12. A device for securing a trim component to a vehicle body, comprising:
a clip securable to the trim component, the clip defining an opening to receive a post of the vehicle body at least partially therein, the clip including a tapered protrusion extending radially inward from the clip; and
an insert positionable at least partially within the clip, the insert engageable with the post to couple the clip and the trim component to the vehicle body, the tapered protrusion configured to guide and retain the insert within the clip.

13. The device of claim 12, wherein the clip comprises:
a housing securable to the insert, the housing defining a closed end and an open end, the housing including:
a diameter larger at the open end than a diameter at the closed end, the open end defining the opening;
a flange extending from the closed end of the housing in a direction away from the open end of the housing, and the flange extending laterally outward from the closed end of the housing, the flange configured to couple the housing to the trim component;
a projection extending from an inner surface of the housing, the projection configured to removably couple the housing and the insert; and
a groove formed in the open end of the housing; and
a base removably coupled to the housing, the housing and the base configured to at least partially surround the clip when the base is coupled to the housing, the base including:
a recess formed in the base, the recess configured to guide the post of the vehicle body into the opening; and
a tab extending from a periphery of the base and configured to engage with the groove formed in the open end of the housing to removably couple the base to the housing; and optionally wherein:
the base and the housing are removably coupled together and the housing and the insert are removably coupled together to permit removal of the trim component from the vehicle body;
the housing is configured to remain coupled to the trim component when the trim component is removed from the vehicle body, and
the insert and the base are configured to remain coupled to the post of the vehicle body when the trim component is removed from the vehicle body.

14. The device of any one of claims 12-13, wherein the clip includes:
a body defining a recessed portion configured to receive the insert;
a flange extending from the body and configured to engage with the trim component when the clip is inserted through an aperture of the trim component;
a base;
a first wing hingeably connected to the base and the body; and
a second wing hingeably connected to the base and the body opposite the first wing;
wherein the first wing and the second wing are operable between an extended position and a retracted position, in the extended position, the first wing and the second wing are insertable through the aperture of the trim component, and, in the retracted position, the first wing and the second wing couple the clip to the trim component; and optionally
wherein the body includes a projection and the base includes a groove, the groove configured to receive the projection to retain the first wing and the second wing in the retracted position, and wherein the recessed portion includes a tapered projection, the tapered projection configured to guide the insert within the recessed portion and retain the insert within the recessed portion.

15. A method of coupling a trim component to a vehicle body, the method comprises:
installing an insert within a clip, the clip including a tapered projection to guide and retain the insert within the clip, the clip defining an opening;
securing the clip to the trim component; and
inserting a post of the vehicle body within the opening to couple the clip and the trim component to the vehicle body.
